# DEMANDE DE BREVET EUROPEEN

(11) **EP 1 821 022 A1**
(43) Date de publication de la demande: **22.08.2007**
(21) Numéro de dépôt: 07102659.5
(22) Date de dépôt: 19.02.2007
(51) Int. Cl.: F16L 37/098, F16L 37/10

(54) **Raccord rapide à encliquetage**

(30) Priorité: 21.02.2006 FR 0601502
(71) Demandeur: SOCIETE DES POLYMERES BARRE THOMAS, 35000 Rennes (FR)
(72) Inventeur: Youinou, Pierre, 35520, La Meziere (FR)
(74) Mandataire: Le Faou, Daniel

(57) **Abrégé**

Ce raccord, servant à la connexion de deux conduites l'une à l'autre comprend une paire d'embouts tubulaires mâle (4) et femelle (2) aptes à être emmanchés l'un dans l'autre par translation axiale, l'embout mâle (4) étant pourvu d'une nervure de blocage annulaire, tandis que l'embout femelle (2) comporte une bague fendue (3) élastiquement déformable, mobile en rotation et pourvue de dents de verrouillage (8a,8b) aptes à occuper soit une position « active », dans laquelle elles retiennent la dite nervure annulaire, soit une position « escamotée », dans laquelle elles sont plus éloignées l'axe longitudinal (X-X') que lorsqu'elles sont en position active, autorisant alors le retrait par translation axiale de l'embout mâle ; l'embout femelle (2) est muni d'au moins une rampe (22) apte à provoquer la déformation radiale de ladite bague (3) et, corrélativement le déplacement des dents (8a,8b) dans leur position escamotée par suite de la rotation de cette bague (3) sur elle-même, sur une fraction de tour.

Connexion de tubulures transportant des fluides, notamment dans l'industrie automobile.

## Description

La présente invention concerne un raccord rapide à encliquetage.

Elle concerne plus particulièrement un raccord servant à connecter deux conduites l'une à l'autre, ou une conduite avec un embout cylindrique, le dispositif comprenant un embout mâle apte à être emmanché dans un embout femelle et assemblé de manière étanche aux fluides dans ce dernier.

FR-A-2 685434, FR-A-2705430, FR-A-2827364, EP-B- 0946841 et US-A- 4781400 sont des documents de brevet se rapportant à ce genre de raccord rapide.

A simple titre d'exemple d'application, non limitatif, de ce genre de raccord, on peut citer le domaine de l'industrie automobile, pour connecter une tubulure du circuit de refroidissement à un composant du circuit, tel qu'une pompe, le radiateur, le moteur thermique à refroidir ou une boîte de dégazage notamment.

On a déjà proposé diverses solutions pour assurer une connexion rapide et étanche de l'embout mâle avec l'embout femelle.

Une solution usuelle, connue par exemple du US-A- 4781400, est de recourir à une agrafe métallique rapportée qui autorise l'enfoncement axial de l'embout mâle dans l'embout femelle, par déformation de pattes élastiques, mais qui interdit son retrait.

Dans ce dispositif connu, il est nécessaire d'enlever complètement l'agrafe pour déconnecter les deux pièces, ce qui est une opération délicate et pose un risque de perte de l'agrafe.

Avec d'autres systèmes, le déverrouillage de l'encliquetage s'opère par pression radiale exercée manuellement en une zone, ou en deux zones différentes, par exemple sur une paire de poussoirs diamétralement opposés.

Naturellement, pour que les doigts de l'opérateur puissent atteindre facilement la (ou les) zone(s) en question, il est souhaitable que celle(s)-ci soi(en)t facilement accessible(s), ce qui suppose bien souvent une orientation favorable du raccord par rapport à son axe longitudinal.

Il est également nécessaire de disposer d'un débattement suffisant, en direction radiale, pour actionner convenablement le dispositif ; or il est courant que l'accès au dispositif soit limité et contrarié en raison de la présence d'obstacles situés à proximité immédiate de celui-ci.

En l'occurrence, c'est bien souvent le cas sous le capot moteur d'un véhicule automobile.

La présente invention vise à résoudre ces difficultés.

Cette invention, en effet, a pour objectif de proposer un raccord à encliquetage rapide du genre susmentionné qui, tout en étant de conception simple et d'un coût de fabrication modéré, puisse être actionné facilement et de manière sûre, aussi bien pour la connexion que pour la déconnexion, même dans des endroits d'accès difficile, et sans risque de perte d'une pièce détachée au cours de la manoeuvre.

De manière connue, ce raccord rapide à encliquetage, pour la connexion de deux conduites l'une à l'autre (ou d'une conduite avec un embout cylindrique) comprend une paire d'embouts tubulaires, l'un mâle, apte à être emmanché par translation axiale dans l'autre, femelle, et assemblé de manière étanche aux fluides à ce dernier ;

Conformément à l'invention, d'une part, l'embout mâle est pourvu d'une nervure de blocage périphérique annulaire, tandis que l'embout femelle comporte une bague fendue à paroi élastiquement déformable, qui est mobile en rotation autour de son axe longitudinal et possède au moins une dent de verrouillage apte à occuper sélectivement deux positions radialement décalées, à savoir soit une première position dite « active », dans laquelle elle peut s'appliquer contre la face arrière de ladite nervure annulaire, afin de la retenir, de manière à maintenir l'embout mâle emmanché dans l'embout femelle, soit une seconde position, dite « escamotée », dans laquelle elle est plus éloignée dudit axe longitudinal que lorsqu'elle est dans sa position active, autorisant alors le retrait par translation axiale de l'embout mâle, et que, d'autre part, l'embout femelle est muni d'au moins une rampe apte à provoquer la déformation radiale de ladite bague et, corrélativement le déplacement radial, vers l'extérieur, de ladite dent de verrouillage, de sa position active vers sa position escamotée, par suite de la rotation de cette bague dans un sens déterminé, sur une fraction de tour.

Ainsi, il est possible de déconnecter facilement les deux embouts, quelle que soit leur orientation ; il suffit pour cela de faire tourner légèrement la bague sur elle-même, sans se préoccuper de la zone de préhension de cette bague, ce qui est aisé même si le raccord est proche d'un obstacle mécanique, voire même s'il est accolé à un tel obstacle, et/ou s'il se trouve dans un endroit difficile d'accès.

Une fois que la bague a été ainsi déplacée en rotation, il suffit de séparer par translation axiale les deux embouts pour les déconnecter complètement.

Par ailleurs, selon un certain nombre de caractéristiques avantageuses, mais non limitatives, de l'invention :
- la dent de verrouillage consiste en un rebord en forme de secteur annulaire ;
- la bague fendue est pourvue de plusieurs dents de verrouillage régulièrement réparties angulairement par rapport à l'axe longitudinal de la bague (et de l'embout femelle) ;
- la bague fendue est pourvue d'une paire de dents de verrouillage diamétralement opposées par rapport à cet axe longitudinal ;
- la bague fendue tend naturellement à se refermer sur elle même par suite de l'élasticité de sa paroi de manière à rappeler automatiquement la (ou les) dent(s) en position active ;
- ladite bague est pourvue à sa périphérie de reliefs, tels que des stries, qui en favorisent la prise en main ;
- la valeur de l'angle de rotation de la bague qui est nécessaire pour déplacer la (ou les) dent(s) de la position active à la position escamotée est comprise entre 30° et 60° et est avantageusement de l'ordre de 45° ;
- les embouts mâle et femelle sont en matière plastique injectée, par exemple en polyamide ou en polypropylène chargé de fibres de verre ;
- l'embout femelle présente intérieurement un évidement annulaire servant de logement pour un joint d'étanchéité torique et pour une bague d'arrêt de ce joint.
- la bague d'arrêt possède un profil tel qu'elle peut être mise en place dans son logement de manière réversible (et non dans un sens donné).

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue générale éclatée et en perspective d'un embout femelle constitutif d'un raccord conforme à l'invention ;
- la figure 2 est une vue en perspective de l'embout mâle complémentaire ;
- la figure 3 est une vue en perspective de l'embout femelle de la figure 1, dont les composants ont été assemblés, et qui est monté à l'extrémité d'une conduite ;
- la figure 4 est une vue similaire à la figure 3, avec l'embout mâle emmanché dans l'embout femelle, cette vue étant destinée à illustrer la façon d'opérer pour déconnecter le raccord ;
- la figure 5 est un schéma (dans un plan transversal) de l'embout femelle avec sa bague fendue, avec les dents de verrouillage en position active ;
- la figure 6 est un schéma analogue à celui de la figure 5, avec les dents de verrouillage en position escamotée ;
- la figure 7 est un dessin du raccord en coupe axiale.

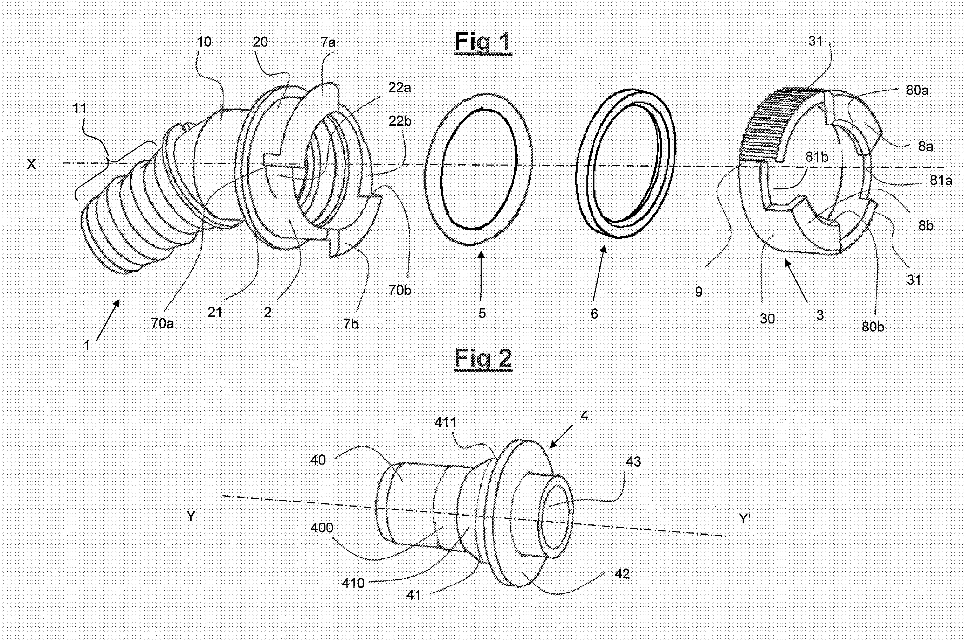

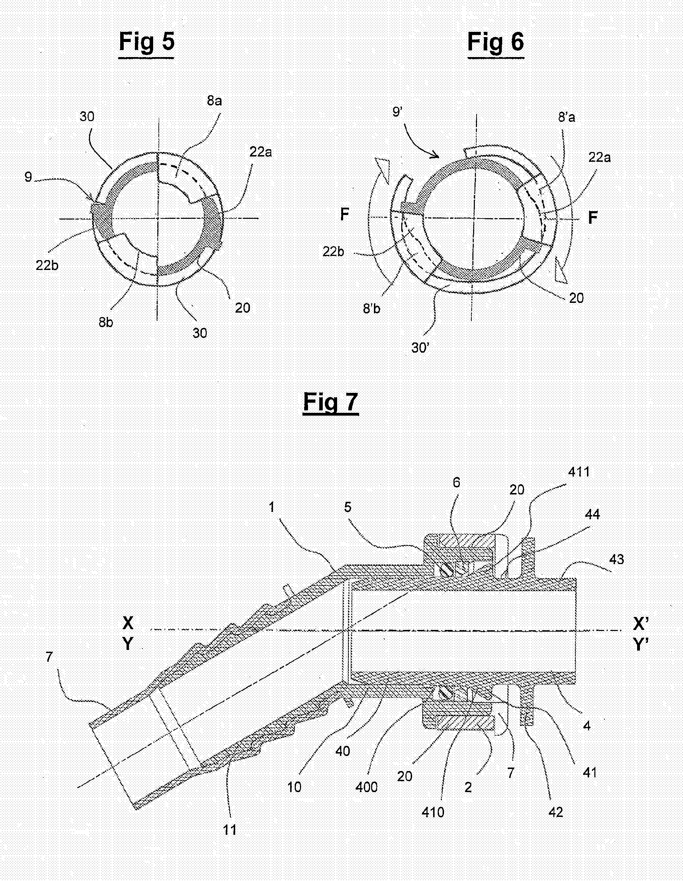

La figure 1 représente un manchon tubulaire 1 qui forme partie intégrante d'un embout femelle 2, d'axe **X-X',** l'ensemble étant une pièce en matière plastique rigide et mécaniquement résistante, fabriquée par moulage par injection. Le manchon 1 a une forme coudée, formée d'une partie cylindrique 10 coaxiale à l'embout 2 et une partie 11 dont l'axe forme un angle obtus avec le précédent. La partie 11 a une paroi externe nervurée, à profil « sapin », apte à être engagée à l'intérieur de la conduite 7 - par exemple un tuyau en caoutchouc ou en matière plastique - à laquelle l'embout doit être connecté (voir figure 7).

La partie 10 présente une plage lisse 20 qui est bordée, du côté de la partie 1, par un épaulement annulaire 21 et de l'autre côté par une paire de rebords 7a, 7b en forme de secteurs circulaires, dirigés vers l'extérieur et diamétralement opposés. Ces rebords présentent chacun, à l'une de leurs extrémités, un décrochement 70a, respectivement 70b, qui recouvre partiellement la plage lisse 20, et se raccorde à celle-ci par une zone de transition 22a, 22b constituant une rampe.

Comme on le voit plus clairement sur la figure 7, la partie 2 possède un diamètre intérieur sensiblement plus grand que celui de la partie 10 ; elle est adaptée pour servir de logement à un joint torique 5 en matière souple et élastique, par exemple en caoutchouc, ainsi qu'une bague 6 de positionnement et de retenue du joint 5. Cette bague, en matière plastique rigide, est emmanchée à force dans l'ouverture centrale de la partie 2 et bloquée par une strie annulaire anti-retour.

Plus précisément, la bague 6 possède un bord interne de forme biconique, de sorte qu'il peut être mis en place de manière réversible (dans n'importe quel sens), ce qui élimine tout risque d'erreur au montage.

Cette forme biconique évite tout contact de la bague 6 avec l'embout mâle lors de l'assemblage.

La référence 3 désigne une bague en matière plastique rigide et mécaniquement résistante, présentant une bonne élasticité, fabriquée par moulage par injection.

Cette bague est fendue selon une génératrice ; la fente porte la référence 9 sur la figure 1.

La paroi 30 de la bague est de faible épaisseur, et a une forme cylindrique, dont le diamètre intérieur est égal au diamètre extérieur de la plage 20.

Sa face externe présente des zones striées anti-glissement 31.

Sa largeur (dimension en direction axiale) correspond à celle de la plage 20. L'un des bords de la bague 3 est pourvu d'une paire de dents 8a, 8b en forme de secteurs circulaires, diamétralement opposés, et dirigés vers l'intérieur (c'est-à-dire vers l'axe **X-X'**). Leur bord intérieur 80a, 80b est biseauté.

A l'une de leur extrémité, la paroi 30 est découpée, présentant une zone échancrée 81a, respectivement 81b.

La bague 3 possède une élasticité suffisante, permettant de l'ouvrir (grâce à la fente 9) pour lui donner la forme d'un « C », et de la mettre en place sur la partie 2.

Cette mise en place se fait de telle façon que les échancrures 81a, 81b viennent en regard des rampes 22b, respectivement 22a, de sorte que, la partie 30 reprenant sa forme naturelle cylindrique, elle entoure intimement la paroi lisse 20. Les dents 8a, 8b, quant à elles, se trouvent positionnées entre deux rebords 7a, 7b.

La bague 3 est immobilisée en translation sur la partie 2 grâce à la présence de l'épaulement annulaire 21 d'un côté, et des rebords 7 de l'autre.

Chacun des rebords 7 ou dents 8 en forme de secteur annulaire s'étend sur un arc sensiblement inférieur à un quart de circonférence (90°), par exemple de valeur d'angle de l'ordre de 70° pour les rebords 7a, 7b et de l'ordre de 65° pour les dents 8a, 8b.

Les parties 2 et 3 sont ainsi conformées qu'après montage les organes 7a et 8a soient adjacents, et que de la même façon les organes 7b et 8b soient adjacents. La bague possède une certaine liberté de rotation sur elle-même (autour de l'axe **X-X'**), d'amplitude limitée, jusqu'à ce que les dents 8a et 8b viennent en butée contre les rebords 7b et, respectivement 7a.

Cette amplitude est par exemple de 45° environ.

Comme on le verra plus loin, en référence aux figures 5 et 6, durant ce mouvement de rotation, la zone de bordure de la paroi 30 de la bague va recouvrir progressivement les rampes 22 (qui étaient initialement découvertes), ce qui va « ouvrir » la bague et provoquer son expansion radiale.

L'embout mâle 4 représenté sur la figure 2 est également une pièce en matière plastique rigide et mécaniquement résistante, fabriquée par moulage par injection.

Cette pièce est tubulaire et possède une symétrie de révolution, d'axe **Y-Y'**. On considérera conventionnellement dans la suite de la description et dans les revendications que l'extrémité « avant » de l'embout 4 est tournée vers la gauche des figures 2, 4 et 7, son extrémité arrière étant par conséquent dirigée vers la droite.

L'embout 4 - de type standard - possède, de l'avant vers l'arrière, une partie principale cylindrique 40, une nervure annulaire 41, une plaquette transversale discoïde 42, et un manchon cylindrique 43. Ce dernier forme partie intégrante de l'organe à connecter (non représenté), par exemple une boîte de dégazage. La plaquette 42 fait office de butée pour ce montage.

Le diamètre de la partie cylindrique 40 est égal au diamètre intérieur de la partie 10 du manchon 1.

La nervure 41 est séparée de la plaquette 42 par une partie cylindrique de diamètre sensiblement égal à celui de la partie 40.

Comme on le voit plus précisément sur la figure 7, la nervure 41 a la une section en forme de triangle rectangle, présentant un bord avant 410 conique, formant chanfrein, et un bord arrière 411 perpendiculaire à l'axe **Y-Y'.**

Au voisinage de cette nervure, la partie 40 présente une zone 400 de diamètre légèrement accru.

Lorsque la bague 3 est à l'état naturel fermé, l'écartement mutuel des bords intérieurs 80a, 80b des dents 8a, 8b est sensiblement égal au diamètre de la partie 44, contre laquelle ils sont destinés à s'appliquer lorsque la connexion est réalisée.

Cette connexion s'opère comme suit.

On emmanche axialement l'embout mâle 4 dans l'embout femelle 20 après avoir aligné les axes **Y-Y'** et **X-X'.** La partie 40 pénètre sans jeu dans la partie 10. Au cours de l'enfoncement, la nervure 41 vient porter contre les dents 8a, 8b.

La forme chanfreinée de la zone avant 410 de la nervure coopère avec les bords internes 80a, 80b, également chanfreinés, de ces dents, pour les écarter, la bague 3 s'ouvrant légèrement et progressivement pour autoriser le passage de la nervure.

En fin d'emmanchement, le joint 5 entoure la partie en surépaisseur 400, et se trouve comprimé entre cette dernière et son logement dans l'embout 2, assurant l'étanchéité à ce niveau.

Les dents 8a, 8b se sont resserrés sur la partie 44 et servent de butée d'arrêt pour la face arrière 411 de la nervure 41, empêchant ainsi le retrait de l'embout mâle.

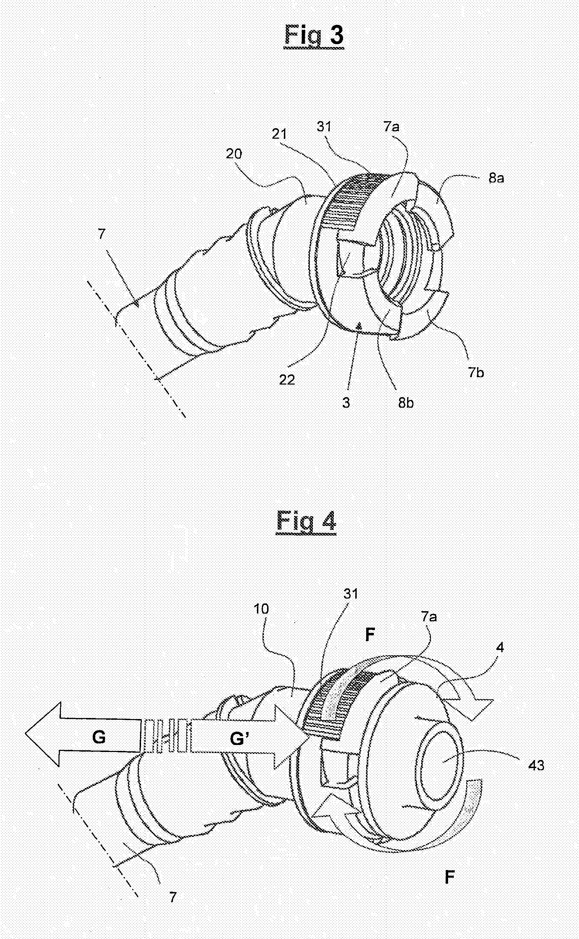

La connexion des deux embouts se fait donc par encliquetage, par un simple mouvement de translation axiale, symbolisé par la flèche **G** sur la figure 4.

Pour assurer la déconnection, on commence par faire tourner la bague sur elle même sur une fraction de tour.

Ce mouvement manuel, facilité par la présence des stries de préhension 31, est symbolisé par les flèches **F** sur les figures 6 et 4.

Il permet de provoquer l'expansion radiale de la bague comme on le comprend à l'observation des figures 5 et 6.

La coopération des rampes 22a et 22b avec la face interne de la paroi 30 provoque l'expansion de cette dernière, référencée 30' sur la figure, grâce à la présence de la fente 9, qui s'élargit (référence 9').

Les dents 8a, 8b se trouvent ainsi progressivement écartées l'une de l'autre, vers l'extérieur, occupant finalement des positions 8'a, 8'b dans lesquelles leur espacement mutuel est supérieur au diamètre de la nervure 41 de l'embout mâle.

Il suffit alors de retirer l'embout mâle vers l'arrière, comme symbolisé par la flèche **G'** sur la figure 4, tout en maintenant la bague dans sa position ouverte, pour déconnecter le dispositif.

Une fois la bague relâchée, elle pivote automatiquement en sens inverse, en raison de l'élasticité de la matière et reprend sa position initiale.

En théorie, un raccord conforme à l'invention peut comporter une seule dent de verrouillage ; en pratique, il est souhaitable d'en prévoir au moins deux, comme dans le mode de réalisation qui vient d'être décrit.

On pourrait aussi réaliser, sans sortir du cadre de l'invention, un embout femelle muni de trois ou de quatre dents de verrouillage, voire plus.

Il est important que ces dents aient une répartition angulaire régulière, qu'ils s'intercalent entre des rebords fixes de même nombre, et de répartition correspondante, et qu'une rampe d'expansion soit associée à chacune de ces dents.

## Revendications

1. Raccord rapide à encliquetage pour la connexion de deux conduites l'une à l'autre, qui comprend une paire d'embouts tubulaires (4, 2), l'un mâle, (4) apte à être emmanché par translation axiale dans l'autre, femelle, (2) et assemblé de manière étanche aux fluides à ce dernier, **caractérisé par le fait que**, d'une part, l'embout mâle (4) est pourvu d'une nervure de blocage périphérique annulaire (41), tandis que l'embout femelle (2) comporte une bague fendue (3) à paroi (30) élastiquement déformable, qui est mobile en rotation autour de son axe longitudinal (**X-X'**) et possède au moins une dent de verrouillage (8) apte à occuper sélectivement deux positions radialement décalées, à savoir soit une première position dite « active », dans laquelle elle peut s'appliquer contre la face arrière (411) de ladite nervure annulaire (41), afin de la retenir, de manière à maintenir l'embout mâle (4) emmanché dans l'embout femelle (2), soit une seconde position, dite « escamotée », dans laquelle elle est plus éloignée dudit axe longitudinal (**X-X'**) que lorsqu'elle est dans sa position active, autorisant alors le retrait par translation axiale de l'embout mâle (4), et que, d'autre part, l'embout femelle (2) est muni d'au moins une rampe (22) apte à provoquer la déformation radiale de ladite bague (3) et, corrélativement le déplacement radial, vers l'extérieur, de ladite dent de verrouillage (8), de sa position active vers sa position escamotée, par suite de la rotation de cette bague (3) dans un sens déterminé, sur une fraction de tour.

2. Raccord rapide à encliquetage selon la revendication 1, **caractérisé par le fait que** ladite dent de verrouillage (8) consiste en un rebord en forme de secteur annulaire.

3. Raccord rapide à encliquetage selon la revendication 1 ou 2, **caractérisé par le fait que** ladite bague fendue (3) est pourvue de plusieurs dents de verrouillage (8), régulièrement réparties angulairement par rapport à l'axe longitudinal (**X-X'**).

4. Raccord rapide à encliquetage selon la revendication 3, **caractérisé par le fait que** ladite bague fendue (3) est pourvue d'une paire de dents de verrouillage (8a, 8b), diamétralement opposées par rapport à l'axe longitudinal (**X-X'**).

5. Raccord rapide à encliquetage selon l'une des revendications 1 à 4, **caractérisé par le fait que** ladite bague fendue (3) tend naturellement à se refermer sur elle même par suite de l'élasticité de sa paroi (30), de manière à rappeler automatiquement la (ou les) dent(s) (8) en position active.

6. Raccord rapide à encliquetage selon l'une des revendications 1 à 5, **caractérisé par le fait que** ladite bague (3) est pourvue à sa périphérie de reliefs, tels que des stries (31), qui en favorisent la prise en main.

7. Raccord rapide à encliquetage selon l'une des revendications 1 à 6, **caractérisé par le fait que** la valeur de l'angle de rotation de la bague (3) qui est nécessaire pour déplacer la (ou les) dent(s) de la position active à la position escamotée est comprise entre 30° et 60°, et est avantageusement de l'ordre de 45°.

8. Raccord rapide à encliquetage selon l'une des revendications 1 à 7, **caractérisé par le fait que** les embouts mâle et femelle sont en matière plastique injectée, par exemple en polyamide ou en polypropylène chargé de fibres de verre.

9. Raccord rapide à encliquetage selon l'une des revendications 1 à 8, **caractérisé par le fait que** l'embout femelle (2) présente intérieurement un évidement annulaire servant de logement pour un joint d'étanchéité torique (5) et pour une bague d'arrêt (6) de ce joint (5).

10. Raccord rapide à encliquetage selon la revendication 9, **caractérisé par le fait que** la bague d'arrêt (6) possède un profil tel qu'elle peut être mise en place dans son logement de manière réversible.
